# EUROPÄISCHE PATENTSCHRIFT

(11) **EP 1 419 085 B1**
(45) Veröffentlichungstag und Bekanntmachung des Hinweises auf die Patenterteilung: **09.03.2005**
(21) Anmeldenummer: 02794716.7
(22) Anmeldetag: 19.08.2002
(51) Int. Cl.: B62K 15/00

(54) **ZUSAMMENKLAPPBARES FAHRRAD**
FOLDING BICYCLE
VELO PLIANT

(30) Priorität: 20.08.2001 AT 13052001
(43) Veröffentlichungstag der Anmeldung: 19.05.2004
(73) Patentinhaber: Hofbauer, Albert, 1100 Wien (AT)
(72) Erfinder: Hofbauer, Albert, 1100 Wien (AT)
(74) Vertreter: Beer, Manfred, Dipl.-Ing.
(86) Internationale Anmeldenummer: PCT/AT2002/000248
(87) Internationale Veröffentlichungsnummer: WO 2003/016124

(56) Entgegenhaltungen:
- EP-A- 0 116 096
- EP-A- 0 565 760
- US-A- 4 422 663
- US-A- 6 032 971
- PATENT ABSTRACTS OF JAPAN vol. 1995, no. 11, 26. Dezember 1995 (1995-12-26) -& JP 07 205863 A (DAIKIN MFG CO LTD), 8. August 1995 (1995-08-08)
- PATENT ABSTRACTS OF JAPAN vol. 1995, no. 11, 26. Dezember 1995 (1995-12-26) -& JP 07 205864 A (DAIKIN MFG CO LTD), 8. August 1995 (1995-08-08)

## Beschreibung

Die Erfindung betrifft ein Fahrrad mit den Merkmalen des einleitenden Teils des unabhängigen Anspruches 1.

Ein derartiges Rad ist aus der US 6 032 971 A bekannt. Bei diesem bekannten Fahrrad ist auch der das Hinterrad tragende Teil des Rahmens nach Art eines klappbaren Gelenkvierecks ausgebildet und über eine entlang des Sattelrohres verschiebbare Hülse mit den vorderen Rahmenrohren gekuppelt. Da bei dem Rad der US 6 032 971 A nicht nur der zum Lenkerrohr führende Teile des Rahmens, sondern auch der das Hinterrad tragende Teil des Rahmens in Art eines Gelenkvierecks klappbar ausgebildet sind, ergibt sich insgesamt eine geringe Stabilität und Verwindungssteifheit des Rahmens, wozu noch kommt, dass sich durch die Kupplung der beiden Rahmenteile über die am Sattelrohr verschiebbare und dort festlegbare Hülse eine vergleichsweise aufwändige Kinematik ergibt.

Der Erfindung liegt die Aufgabe zu Grunde, ein Rad der eingangs genannten Gattung in der Richtung weiterzubilden, dass es einen einfacheren Aufbau besitzt und im fahrbereiten Zustand stabil ist.

Gelöst wird diese Aufgabe bei einem Rad der eingangs genannten Gattung durch die Merkmale des kennzeichnenden Teils von Anspruch 1.

Bevorzugte und vorteilhafte Ausbildungen des erfindungsgemäßen Fahrrades sind Gegenstand der Unteransprüche.

Da bei dem erfindungsgemäßen Fahrrad ein das Hinterrad tragender Teil des Rahmens vorgesehen ist, der für sich gesehen zum Verkürzen des Rades verschwenkbar ist, wobei die Schwenkachse parallel zu den Schwenkachsen in den Rahmenrohren im vorderen Teil des Rahmens des Fahrrades ausgerichtet ist, ergibt sich eine vergleichsweise einfache Kinematik.

Die erfindungsgemäße Ausgestaltung erlaubt es auch, den hinteren, zum Verkürzen des Rades verschwenkbaren Teil des Rahmens, also den Teil des Rahmens, der das Hinterrad trägt, mit dem zum Lenkerrohr hin führenden Teil des Rahmens des erfindungsgemäßen Fahrrades zu kuppeln, so dass in einer Ausführungsform das Zusammenklappen des vorderen Teils des Rahmens des erfindungsgemäßen Fahrrades zugleich mit dem Abschwenken des hinteren Teils des Rahmens, also des Teils des Rahmens, der das Hinterrad trägt, erfolgt.

Bei dem erfindungsgemäßen Fahrrad können die Abmessungen der Teile des Fahrrades und die Anordnung der Gelenke in einer beispielhaften Ausführungsform derart gewählt werden, dass der Sattel auch in der in die Versorgungslage zusammengeklappten Stellung des Fahrrades im Bereich oberhalb und zwischen den Rädern angeordnet ist. Dies erlaubt es, insbesondere, wenn der das Hinterrad tragende Teil des Rahmens des Fahrrades in der eingeklappten Stellung arretiert ist, das Fahrrad auch in der "verkürzten" Stellung zum Sitzen oder zum Fahren in der "verkürzten" Stellung zu benützen. Dabei ist es vorteilhaft, dass das Vorderrad auch in der zusammengeklappten Stellung lenkbar bleibt. Der Schwerpunkt einer auf dem Rad in der zusammengeklappten Stellung sitzenden Person befindet sich also zwischen den durch die Achsen der beiden Räder gehenden, lotrechten Ebenen.

In einer Ausführungsform der Erfindung kann auch vorgesehen sein, dass das den Sattel tragende Rohr aus dem Sattelrohr des Rahmens bis zu einem Anschlag herausziehbar ist. Dabei ist die Länge des aus dem Sattelrohr heranziehbaren Rohres bevorzugt so gewählt, dass die Strecke, um die das Rohr aus dem Sattelrohr herausgezogen werden kann, etwa so groß ist wie der Hub des oberen Endes des Sattelrohres, wenn das Fahrrad aus der Gebrauchslage in die Versorgungslage zusammengeklappt wird. Somit kann erreicht werden, dass die Sitzhöhe in der Gebrauchslage (bis zum Anschlag herausgezogenes den Sattel tragendes Rohr) und in der zusammengeklappten Versorgungslage (vollständig in das Sattelrohr des Rahmens hineingeschobenes, den Sattel tragendes Rohr (etwa gleich hoch ist).

Weitere Einzelheiten und Merkmale sowie Vorteile des erfindungsgemäßen Fahrrades ergeben sich aus der nachstehenden Beschreibung und zwei bevorzugten Ausführungsbeispielen.

Es zeigt:
Fig. 1 in Seitenansicht ein erfindungsgemäßes Fahrrad in einer ersten Ausführungsform im betriebsbereiten Zustand,
Fig. 2 das Fahrrad aus Fig. 1 im verkürzten (gefalteten) Zustand,
Fig. 3 im Axialschnitt ein Gelenk im Rahmen des erfindungsgemäßen Fahrrades,
Fig. 3a wesentliche Teile des Gelenks in auseinandergezogener Darstellung,
Fig. 3b eine Seitenansicht zu Fig. 3a,
Fig. 4 eine zweite Ausführungsform des Fahrrades im fahrbereiten Zustand,
Fig. 5 die Ausführungsform von Fig. 4 im verkürzten Zustand,
Fig. 6 ein Detail am oberen Ende des Sattelrohres der Ausführungsform von Fig. 1 und 2
Fig. 7 eine Seitenansicht zu Fig. 6 und
Fig. 8 den das Hinterrad tragenden Teil des Rahmens in der Ausführungsform von Fig. 1 und 2 für sich gesehen.

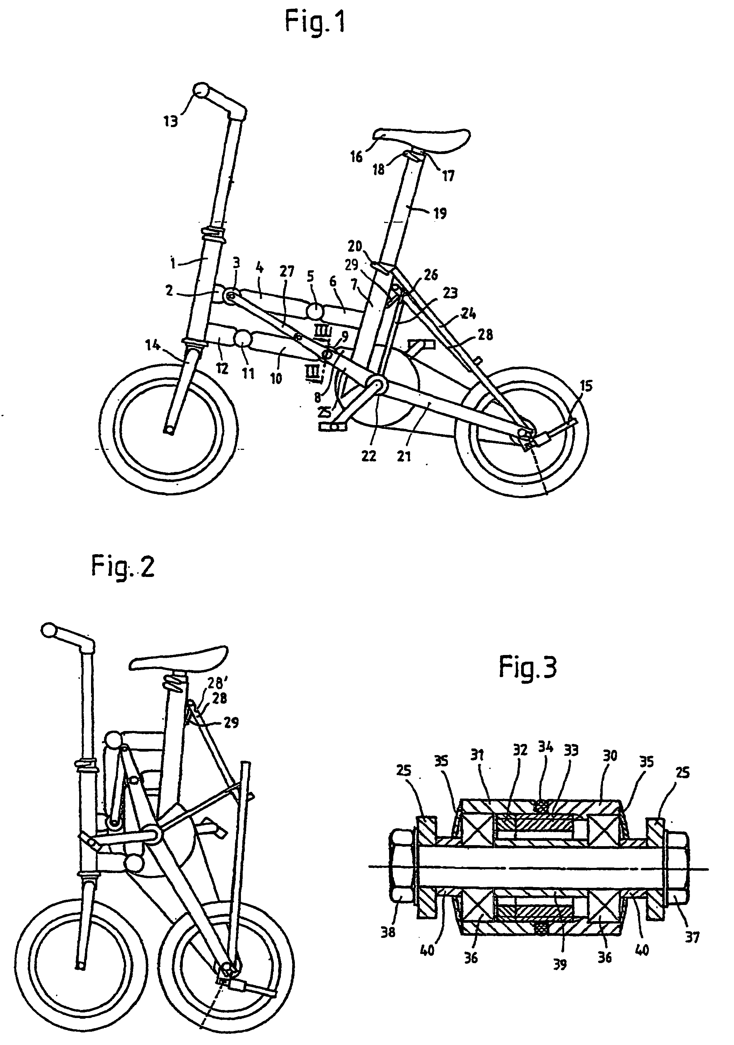

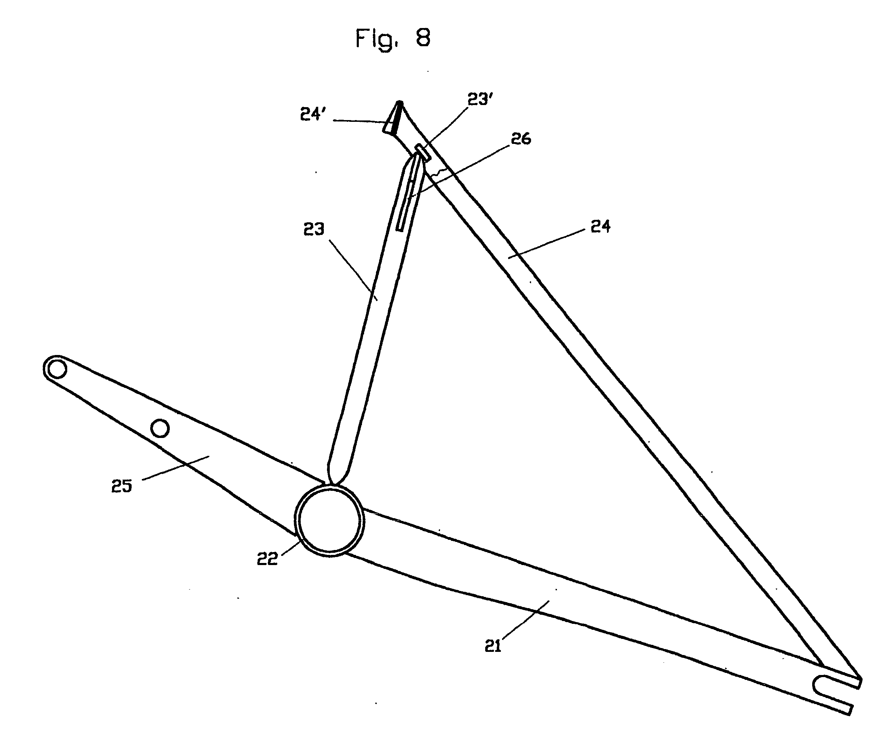

Bei der in den Fig. 1 bis 3 und 6 bis 8 gezeigten Ausführungsform besitzt das erfindungsgemäße Fahrrad einen Rahmen, in dem ein Vorderrad und ein Hinterrad gelagert sind. Das Hinterrad wird im Ausführungsbeispiel, wie bei Fahrrädern üblich, mit Hilfe eines Tretkurbelantriebes und einer Kette angetrieben.

Im vorderen Teil des Rahmens ist ein Lenkerrohr 1 vorgesehen, von dem unten eine Vorderradgabel 14 und oben ein vorzugsweise höhenverstellbarer Lenker 13 abstehen. Das Lenkerrohr 1 ist mit einem oberen Rahmenrohr 2, 4, 6 und einem unteren Rahmenrohr 8, 10, 12 verbunden, die ihrerseits mit einem Sattelrohr 7 verbunden sind. Das Lenkerrohr 1, das Sattelrohr 7 und das obere Rahmenrohr 2, 4, 6 und das untere Rahmenrohr 8, 10, 12 bilden zusammen einen vorderen Teil des Rahmens des erfindungsgemäßen Fahrrades.

Das obere Rahmenrohr besteht aus drei Rohrstücken 2, 4 und 6, die miteinander über Gelenke 3 und 5 verbunden sind, und von welchen die Rohrstücke 2 und 6 am Lenkerrohr 1 bzw. am Sattelrohr 7 befestigt sind. Das untere Rahmenrohr besteht aus drei Rohrstücken 8, 10 und 12, die über zwei Gelenke 9 und 11 miteinander verbunden sind, wobei die Rohrstücke 8 und 12 am Lenkerrohr 1 bzw. am Sattelrohr 7 befestigt sind. Aus der Darstellung von Fig. 1 ist ersichtlich, dass die Gelenke 3, 5, 9 und 11 annähernd in den Ecken eines Parallelogramms angeordnet sind, so dass der vordere Teil des Rahmens aus der in Fig. 1 gezeigten Stellung ("Gebrauchsstellung") in die in Fig. 2 gezeigte zusammengefaltete Stellung ("Versorgungsstellung") gebracht werden kann, wobei das obere Rahmemrohr 2, 4, 6 und das untere Rahmenrohr 8, 10, 12, insbesondere deren Mittelstücke 4 bis 10 parallelogrammartig bewegt werden.

Wenngleich im gezeigten Ausführungsbeispiel ein oberes und ein unteres Rahmenrohr vorgesehen sind, ist das erfindungsgemäße Rad nicht auf Ausführungsformen mit zwei Rahmenrohren beschränkt. Es können drei, vier Rahmenrohre ebenso vorgesehen sein, wie eine Ausführungsform mit nur einem Rahmenrohr denkbar ist.

Der hintere Teil des Rahmens, in dem das Hinterrad gelagert ist, besteht aus zwei Kettenstreben 21, die gabelartig mit dem Tretkurbelrohr 22 verbunden sind. Des weiteren besitzt der hintere Teil des Rahmens zwei gabelartig angeordnete Hinterradstreben 24, die an ihren unteren Enden im Bereich der Aufnahmestelle für die Achse des Hinterrades mit den Kettenstreben 21 verbunden sind. Die Hinterradstreben 24 sind an ihren oberen Enden miteinander verbunden. Diese Verbindung 24' ist so ausgebildet, dass sie der Außenform des oberen Endes des Sattelrohres 7 angepasst ist.

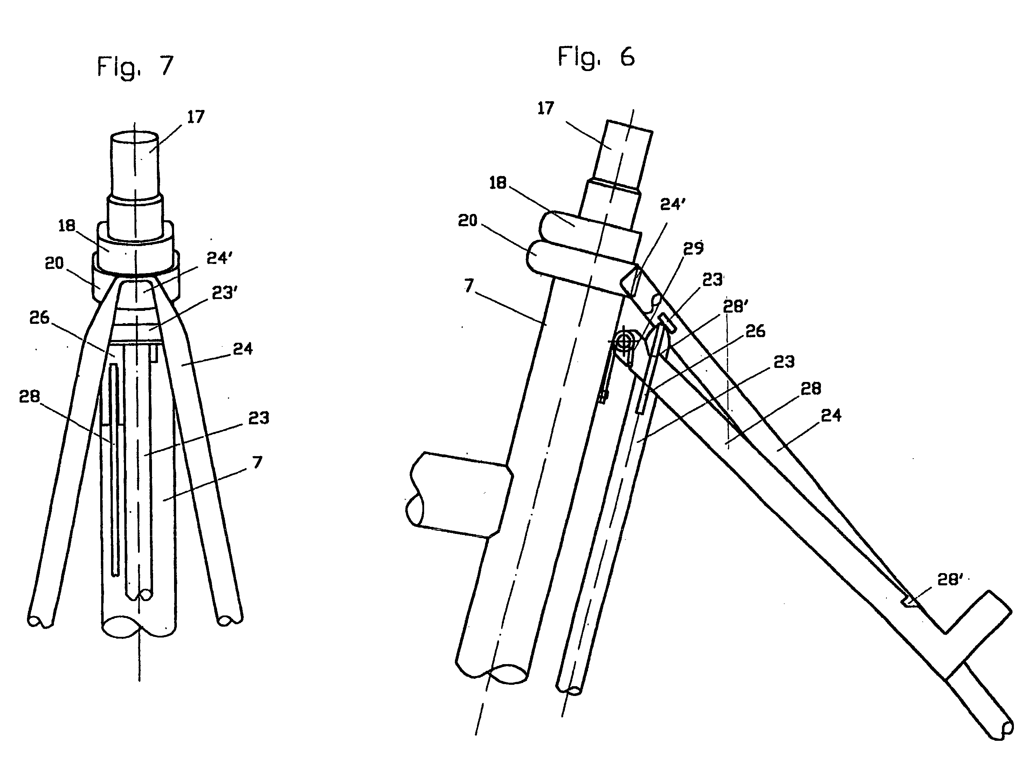

Des weiteren besitzt der hintere, das Hinterrad tragende Teil des Rahmens des erfindungsgemäßen Fahrrades eine vom Tretkurbelrohr 22 nach oben zu den oberen Enden der Hinterradstreben 24 führende Stange 23, so dass die Kettenstreben 21, die Hinterradstreben 24 und die Strebe 23 im wesentlichen ein formstabiles Dreieck bilden. Die Strebe 23 ist mit einer Metallplatte 23' verbunden, die an ihren beiden Enden mit den Hinterradstreben 24 verbunden ist (vgl. Fig. 7).

Am Sattelrohr 7 ist im Bereich seines oberen Endes noch verschwenkbar ein Hebel 28 gelagert, der von einer Feder 29 (Druckschraubenfeder, Fig. 1; Schenkelfeder, Fig. 6) im Sinne einer Verschwenkung nach oben belastet wird. In dem Hebel 28 sind zwei Ausnehmungen 28' vorgesehen (Fig. 2 und 6), welche in eine geschlitzte Platte 26, die von der zwischen den oberen Enden der Hinterradstreben 24 angeordneten Platte 23' nach unten ragt, je nach der Stellung des das Hinterrad tragende Teils des Rahmens eingreift. Wie in Fig. 1 und 6 ersichtlich, greift die Platte 26 in der Betriebsstellung von Fig. 1 und Fig. 6 des Fahrrades in die obere Rastkerbe 28' des Hebels 28 ein, wogegen in der zusammengefalteten, verkürzten Stellung die Platte 26 zwischen den oberen Enden der Hinterradstreben 24 in die hintere Kerbe 28' im Hebel 28 eingreift. So wird einerseits die Betriebsstellung und anderseits die gefaltete Stellung mit Hilfe des Hebels 28 und seiner Rastaussparungen 28', die mit der geschlitzten Platte 26 zwischen den oberen Enden der Hinterradstreben 24 zusammenwirken, gesichert. Um das Fahrrad von der einen in die andere Stellung bewegen zu können genügt es, den Hebel 28 entgegen der Kraft der ihn belastenden Feder 29 niederzudrücken.

Der das Hinterrad tragende Teil des Rahmens kann auch auf andere Weise in der Gebrauchslage (Fig. 1) und in der Versorgungslage (Fig. 2) arretiert werden. Die beschriebene Ausführungsform mit dem mit Kerben 28, 28' versehenem Hebel 28 (=Flacheisen) ist lediglich eine bevorzugte, nicht aber eine beschränkende Ausführungsform.

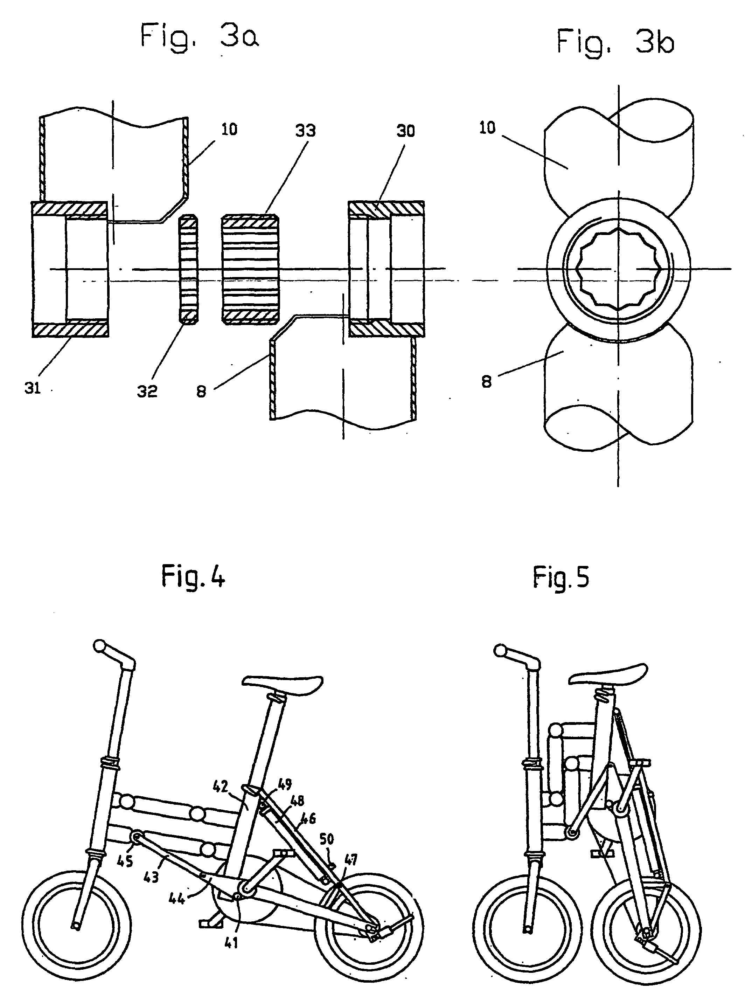

Von Vorteil bei dem erfindungsgemäßen Rad ist es auch, dass sich der Abstand zwischen dem Tretkurbelrohr 22 und der Achse des Hinterrades nicht ändert, wenn das Rad aus der Gebrauchslage von Fig. 1 in die Versorgungslage von Fig. 2 (bzw. Fig. 4 und Fig. 5) zusammengeklappt oder aufgeklappt wird. Dies ist von Vorteil, da Kettenspannvorrichtungen, die eine Verkürzung des Abstandes ausgleichen müssen, entbehrlich sind und dass anstelle des im Ausführungsbeispiel vorgesehenen Kettenantriebes auch ein Kardanantrieb denkbar ist.

Der beschriebene, hintere, das Hinterrad tragende Teil des Rahmens ist mit Hilfe von zwei, vom Tretkurbelrohr 22 ausgehenden Streben 25 um die Achse des Gelenkes 9 des unteren Rahmenrohres 8, 10, 12 verschwenkbar, wobei die Streben 25 über das Gelenk 9 hinaus verlängert sind und mit ihren freien Enden mit Hilfe von zwei Pleuelstangen 27 mit dem vorderen Gelenk 3 des oberen Rahmenrohres 2, 4, 6, also dem Gelenk 3, das dem Lenkerrohr 1 benachbart ist, gekuppelt sind.

Die Kupplung des das Hinterrad tragenden Teils des Rahmens mit dem vorderen Teil des Rahmens über die beiden Pleuelstangen 27 stabilisiert als diagonale Verbindung das Parallelogramm (gebildet von den mittleren Rahmenrohrstücken 4 und 10 sowie den Schwenklagern 3, 5, 9 und 11) und bewirkt während des Faltvorganges eine gleichzeitig zur Verschwenkbewegung des hinteren Teils des Rahmens (Hinterradschwinge) verlaufende Verkürzung des Hauptrahmens durch Abknicken der Rahmenrohre um deren Gelenke 3, 5, 9 und 11. Dabei nähern sich die Räder des Fahrrades in gleicher Ebene an. Vorteilhaft ist dabei, dass das Vorderrad noch um 180° gedreht werden kann, um die Staulänge des gefalteten Fahrrades weiter zu verkürzen.

Bei dem erfindungsgemäßen Fahrrad ist der Sattel 16 am oberen Ende eines Rohres 17 montiert, das teleskopartig aus einem Rohr 19 herausziehbar und durch einen Spannverschluss 18 der gewünschten Höhenlage fixierbar ist. Das Rohr 19 ist im Sattelrohr 7 teleskopartig verschiebbar aufgenommen und kann in der gewünschten Höhenlage durch einen Schnellverschluss 20 fixiert werden. Dabei ist bevorzugt vorgesehen, dass Maßnahmen getroffen sind, die verhindern, dass das Rohr 19 zur Gänze aus dem Sattelrohr 7 herausgezogen wird. Beispielsweise durch eine Aufweitung am unteren Ende des Rohres 19 und eine Einschnürung am oberen Ende des Sattelrohres 7. Wie Fig. 2 zeigt, kann das Rohr 19 und das Rohr 17 zur Gänze ineinandergeschoben werden, wenn das Fahrrad in die gefaltete Stellung gemäß Fig. 2 gebracht worden ist.

Durch die Ausführung der Sattelstütze als verschiebbare Rohre 17 und 19 sind beliebige Sitzhöhen erreichbar, so dass das Fahrrad auch als Kinderfahrrad eingesetzt werden kann, insbesondere wenn der Lenker 13 im Lenkerrohr 1 mit Hilfe eines Schnellverschlusses in beliebigen Höhenlagen fixierbar ist.

Bei dem erfindungsgemäßen Fahrrad ist ein Fahrradständer 15 vorgesehen, der, wie aus den Fig. 1 und 2 ersichtlich, so montiert ist, dass er sowohl im gefalteten Zustand des Fahrrades (Betriebszustand gemäß Fig. 1) hinter der Achse des Hinterrades auf dem Boden trifft und das Fahrrad abstützt. Die Federkraft des Fahrradständers 15 ist vorzugsweise so gewählt, dass sie hinreicht, das Fahrrad zu halten, doch beim Fahren mit ausgeklappten Ständer bei Berührung mit dem Boden problemlos einklappt und das Fahren nicht weiter behindert. Im gefalteten Zustand ist der Fahrradständer 15 ebenfalls benützbar, wobei er, wie in Fig. 2 gezeigt, vor der Achse des Hinterrades auf dem Boden aufsteht, um das geklappte bzw. gefaltete Fahrrad zu stützen.

Von besonderem Vorteil bei dem erfindungsgemäßen Fahrrad ist es, wenn die Gelenke der Rahmenrohre 2, 4, 6 und 8, 10, 12, also die Gelenke 3, 5, 9 und 11 so ausgebildet sind, dass sie im entfalteten Zustand, also im Zustand des Fahrrades gemäß Fig. 1, spielfrei sind. Eine Ausführungsform für ein solches Gelenk ist im Schnitt in Fig. 3 am Beispiel des Gelenks 9 dargestellt.

Das Gelenk 9 umfasst zwei Rohrstücke 30 und 31, mit denen über angeschweißte Laschen die Rohre 8 und 10 verbunden sind (Fig. 3a und 3b) . Die Laschen sind dabei so ausgebildet, dass sie von dem Rohrstück, an dem sie befestigt sind, über das andere Rohrstück ragen, so dass die Anordnung der beiden Rohrstücke 30, 31 zu den Rohren 8 und 10 der Rahmenrohre symmetrisch ist.

In dem einen Rohrstück im Beispiel im Rohrstück 31 ist eine mit Außengewinde versehene Hülse 33 festgelegt, was im gezeigten Ausführungsbeispiel dadurch erreicht wird, dass die Hülse 33 in das Innengewinde des Rohrstückes 31 eingeschraubt und durch eine Sicherungsschraube 32 arretiert wird. Das überstehende Ende der Hülse 33 ist in ein Gewinde in dem anderen Rohrstück 30 eingeschraubt. Das Gewinde im Rohrstück 30 endet etwa in der Mitte des Rohrstückes, so dass die Hülse 33 nur ein bestimmtes Stück weit eingeschraubt werden kann.

Zwischen dem einander zugekehrten Stirnflächen der Rohrstücke 30 und 31 ist auf der Hülse 33 außen aufliegend ein O-Ring 34 vorgesehen.

Die Länge des Überstandes der Hülse 33 mit Außengewinde und die Länge des Gewindes im Inneren des Rohrstückes 30 sind so gewählt, dass das vordere Ende der Hülse 33 auf das Ende des Gewindes im Rohrstück 30 aufläuft, wenn die Rohrstücke 8 und 10 miteinander einen Winkel von 180° einschließen, also die Stellung gemäß Fig. 1 einnehmen. Damit ist erreicht, dass in dem Lager 9 zwischen den Rohren 8 und 10 kein Spiel mehr auftreten kann, weil die Hülse 33 nicht nur im Rohrstück 31, sondern auch im Rohrstück 30 "festsitzt".

Die Hülse 33 und die ringförmige Sicherungsschraube 32 können einen Innen-Mehrkant, z.B. einen Innen-Sechskant oder Innen-Vierkant, aufweisen, damit sie zum Einstellen des Überstandes der Hülse 33 und zum Festziehen der Sicherungsschraube 32 mit Hilfe eines Werkzeuges, z.B. Inbusschlüssel oder Vierkantschlüssel, betätigt werden können.

Die beschriebene Konstruktion der Gelenke erlaubt es auch, den Überstand der Hülse 33 zu justieren, beispielsweise wenn, insbesondere bei längerem Gebrauch, Abnützungen der Hülse 33 auftreten. Hiezu genügt es, die Sicherungsschraube 32 mit Hilfe eines Werkzeuges zu lösen, die Hülse 33 (ebenfalls mit Hilfe eines Werkzeuges) so weit gegenüber dem Rohr 31 zu verstellen, dass ihr freies Ende den gewünschten Überstand über das Rohr 31 aufweist, und dann die Hülse 33 durch Anziehen der Sicherungsschraube 32 in dem Rohr 31 wieder festzulegen.

Im Lager 9 (ebenso wie im Lager 3) sind noch die Streben 25 bzw. die Pleuel 27 verschwenkbar gelagert. Hierzu sind in die Rohrstücke 30, 31 Kugellager 36 eingesetzt, deren Innenringe durch eine Distanz-Hülse 39 abgestützt sind. Über die von einem Bolzen 37 gebildete Achse sind außerhalb der Kugellager 36 noch kurze Hülsen 40 gesteckt und die Streben 25 aufgeschoben. Der Bolzen 37 wird durch eine Mutter 38 gesichert.

Somit ist das Gelenk 9 und ebenso die Gelenke 3, 5 und 11 so ausgebildet, dass sie einen "Festschraubeffekt" besitzen, da die Länge des auslaufend geschnittenen Innengewindes im Rohrstück 30 einerseits und die Länge des Überstandes der Hülse 33, die im anderen Rohrstück 31 festgelegt ist, so bemessen sind, dass sie nach Erreichen des gewünschten Schwenkwinkels (in der Regel gestreckte Rohrstücke) die Hülse 33 am Gewindeauslauf des Innengewindes am Rohrstück 30 festlegt, und anderseits beim Verschwenken in die andere Richtung die Gelenke freigibt.

Der O-Ring 34 und Schutzkappen 35 schützen das Lager vor Schmutz oder Staubeintritt.

Die Kugellager 36 sind vorzugsweise Rillenkugellager, die in Lagersitze in den Rohrstücken 30 und 31 gepresst sind. Die Hinterradschwingen 35 werden im Beispiel mit Hilfe des Schraubbolzens 37, einer Mutter 38 und dreier Distanzbüchsen 39 und 40 mit den Innenlaufringen dieser Kugellager 36 verschraubt.

Durch die etwa 90°-Schwenkbewegung des Gelenkes beim Falten des Rades verursachte Lageänderung der Außenrohre 30, 31 (etwa ein Viertel der Gewindesteigung verringert um das Gewindeaxialspiel durch Lockerung der Verschraubung) wird von den Kugellagern 36 axial ohne weiteres aufgenommen, wobei eine geringe Vorspannung der Kugellager 36 in den Endlagen des Gelenkes im Hinblick auf die Spielfreiheit des Gelenkes erwünscht ist.

Das Gelenk 3, an dem die freien Enden der Pleuelstangen 27 angelenkt sind, ist ähnlich dem Gelenk 9 aufgebaut. Da jedoch die Pleuelaufnahme kaum Querkräfte zu übertragen haben, können statt der Kugellager 36 dort Lagerbüchsen verwendet werden und die mittlere Distanzbüchse 39 kann entfallen. Weiters kann an Stelle der Achsschrauben 37, 38 ein Bolzen mit Nuten an beiden Enden verwendet wird, in die nach dem Aufstecken von Distanzbüchsen 40 und der Pleuel 27 (federnde) Sicherungsscheiben aufgesteckt werden.

Ein weiteres Ausführungsbeispiel des erfindungsgemäßen Rades ist in den Fig. 4 und 5 dargestellt. Dabei zeigt die Fig. 4 das Fahrrad der zweiten Ausführungsform im betriebsbereiten Zustand und Fig. 5 das Fahrrad aus Fig. 4 im gefalteten Zustand.

Im Ausführungsbeispiel von Fig. 4 sind die Kettenstreben 44 um ein Lager 41 verschwenkbar gelagert, das am unteren Ende des Sattelrohres 42 (zwar) auf dessen dem Hinterrad zugewendeter Seite angeordnet ist.

Das dem Vorderrad zugewendete Ende der Kettenstrebe 44 ist bei der in Fig. 4 und 5 gezeigten Ausführungsform über eine Pleuelstange 43 mit dem lenkerrohrseitigen Lager 45 des unteren Rahmenrohres gekuppelt.

Die Hinterradstreben 46, die die Hinterradstreben 24 der Fig. 1 bis 3 entsprechen, sind im Ausführungsbeispiel der Fig. 4 und 5 durch ein Gelenk 47 knickbar ausgebildet.

Im Bereich des oberen Endes des Sattelrohres 42 ist über ein Gelenk 49 eine Teleskopführung 48 mit einer ausziehbaren Teleskopstange befestigt. Das andere Ende der Teleskopführung 48 ist mit den Hinterradstreben 46 im Bereich ihres Gelenkes 47 verbunden. Des weiteren ist ein federbelasteter Hebel 50 vorgesehen, der dem Hebel 28 der Fig. 1 und 2 entspricht. Durch Niederdrücken des Hebels 50 wird der das Hinterrad tragende Rahmenteil freigegeben und kann um das Lager 41 aus der Fig. 4 gezeigten Stellung in die in Fig. 5 gezeigte Stellung verschwenkt werden, wobei auch die Rahmenrohre, wie in Fig. 5 gezeigt, geknickt werden. Dabei verlängert sich die Teleskopführung 48 und nimmt schließlich die in Fig. 5 gezeigte Lage ein.

Die Teleskopführung 48 kann auch als Federbein oder als druckstufengedämpftes Gasdruckfederbein ausgeführt sein. Damit kann ein kraftunterstütztes (automatisches) Zusammenklappen des Rades nach Betätigen des Hebels 50 eingeleitet werden, da die als Feder wirkende Teleskopführung 48, sobald der Hebel 50 betätigt worden ist, das Fahrrad langsam aus der in Fig. 4 gezeigten Stellung in die in Fig. 5 gezeigte Stellung bewegt, bis der Hebel 50 wieder einrastet, wie dies an Hand der Fig. 1 und 2 beschrieben worden ist.

Grundsätzlich ist es möglich, die in der Fig. 4 und 5 gezeigte Ausführungsform der Abstützung des das Hinterrad tragende Teils des Rahmens auch bei der in den Fig. 1 und 2 gezeigten Ausführungsform anzuwenden.

In diesem Fall würde die Teleskopführung 48, die beispielsweise als Federbein oder als Gasdruckfederbein ausgebildet ist, zwischen dem Sattelrohr 7 und den Hinterradstreben 24, etwa in deren Mittelbereich angeordnet sein.

Zusammenfassend kann ein Ausführungsbeispiel der Erfindung wie folgt dargestellt werden:
Ein Fahrrad, das aus einer Gebrauchslage gemäß Fig. 1 in eine raumsparende, zusammengeklappte Stellung gemäß Fig. 2 verändert werden kann, besitzt einen vorderen Teil 2,4,6; 8,10,12 des Rahmens, der parallelogrammartig faltbar ist, und einen das Hinterrad tragenden Teil 21,23,24 des Rahmens, der um eine im Bereich des vorderen Teil des Rahmens liegende Achse 9 in der Nähe des unteren Ende des Sattelrohres 7 verschwenkbar ist. Um die Bewegungen des das Hinterrad tragenden Teils des Rahmens mit der Faltbewegung des vorderen Teils des Rahmens zu synchronisieren, ist der hintere Teil des Rahmens über eine Pleuelstange 27 mit wenigstens einem Schwenklager 3 des vorderen Teils des Rahmens gekuppelt.

## Patentansprüche

1. Fahrrad mit einem Rahmen, in dem ein Hinterrad und über eine Gabel (14) lenkbar ein Vorderrad gelagert sind, wobei der Rahmen, zwischen dem die Gabel (14) aufnehmende Unterrohr (1) und einem Sattelrohr (7)ein oberes Rahmenrohr und ein unteres Rahmenrohr angeordnet sind, die aus je drei Rohren (2,4,6; 8,10,12) bestehen, die über je zwei Gelenke (3,5; 9,11) miteinander verbunden sind, wobei der das Hinterrad tragende Teil (21,23,24,25) des Rahmens um eine zu den Schwenkachsen der Gelenke (3,5; 9, 11) in den Rahmenrohren (2, 4, 6; 8, 10, 12) parallele Achse verschwenkbar ist, **dadurch gekennzeichnet, daß** der das Hinterrad tragende Teil (21,23,24,25) in der Gebrauchslage am Sattelrohr (7,42) abgestützt ist, dass federnde Rastmittel (28,50) vorgesehen sind, um den das Hinterrad tragenden Teil (21,23,24,25) des Rahmens einerseits in der Gebrauchslage und anderseits in der durch Einklappen des das Hinterrad tragenden Teils (21, 23, 24, 25) des Rahmens verkürzten Lage zu fixieren, dass der schwenkbare das Hinterrad tragende Teil (21,23,24,25) des Rahmens über wenigstens eine Pleuelstange (27) mit einem Gelenk (3, 5; 9, 11) im vorderen Bereich des Rahmens gekuppelt ist, und dass die Pleuelstange (27) mit einem über das Gelenk (9, 41) des das Hinterrad tragenden Teils (21,23,24) des Rahmens überstehenden Teil der Kettenstreben (21, 25; 44) verbunden ist.

2. Fahrrad nach Anspruch 1, **dadurch gekennzeichnet, dass** die Achse, um die der das Hinterrad tragende Teil (21,23,24,25) des Rahmens verschwenkbar ist, mit der Achse eines Gelenkes (3,5; 9,11) in den Rahmenrohren (2,4,6; 8, 10, 12) identisch ist.

3. Fahrrad nach Anspruch 2, **dadurch gekennzeichnet, dass** der das Hinterrad tragende Teil (21,23,24,25) des Rahmens um die Achse des Gelenkes (9) verschwenkbar ist, das im unteren Rahmenrohr (8,10,12) dem Sattelrohr (7) benachbart angeordnet ist.

4. Fahrrad nach einem der Ansprüche 1 bis 3, **dadurch gekennzeichnet, dass** der das Hinterrad tragende Teil (21,23,24,25) des Rahmens im wesentlichen dreieckförmig ausgebildet ist.

5. Fahrrad nach einem der Ansprüche 1 bis 4, **dadurch gekennzeichnet, dass** im verschwenkbaren, das Hinterrad tragenden Teil (21,23,24,25) des Rahmens das Tretkurbelrohr (22) vorgesehen ist.

6. Fahrrad nach einem der Ansprüche 1 bis 5, **dadurch gekennzeichnet, dass** der das Hinterrad tragende Teil (21, 23, 24, 25) des Rahmens aus zwei symmetrisch zur Längsmittelebene des Fahrrades verlaufenden Kettenstreben (21), zwei Schwingenstreben (25) und zwei Hinterradstreben (24) und aus einer in der Gebrauchslage zum Sattelrohr (7) im wesentlichen parallelen Strebe (23), die zwischen dem Tretkurbelrohr (22) und der die Hinterradstreben (24) miteinander verbindenden Platte (23') angeordnet ist, besteht.

7. Fahrrad nach Anspruch 1, **dadurch gekennzeichnet, dass** das Rastmittel einen verschwenkbaren Hebel (28,50) aufweist.

8. Fahrrad nach Anspruch 7, **dadurch gekennzeichnet, dass** im verschwenkbaren Hebel (28) zwei Rastausnehmungen vorgesehen sind, in welche eine am oberen Ende der Strebe (23) befestigte Platte (26) eingreift.

9. Fahrrad nach einem der Ansprüche 1 bis 8, **dadurch gekennzeichnet, dass** der verschwenkbare Hebel (28,50) am oberen Ende des Sattelrohres (7,42) gelagert ist.

10. Fahrrad nach einem der Ansprüche 1 bis 9, **dadurch gekennzeichnet, dass** zwischen Sattelrohr (7, 42) und Hebel (28,50) eine diesen nach oben in seine Raststellung drückende Feder vorgesehen ist.

11. Fahrrad nach einem der Ansprüche 1 bis 10, **dadurch gekennzeichnet, dass** die Pleuelstange (27) mit dem Gelenk (3) des oberen Rahmenrohres (2,4,6) gekuppelt ist, das dem Lenkerrohr (1) benachbart ist.

12. Fahrrad nach einem der Ansprüche 1 bis 11, **dadurch gekennzeichnet, dass** die Sattelstütze (16,17) als telekopierbares Doppelrohr ausgebildet ist.

13. Fahrrad nach Anspruch 12, **dadurch gekennzeichnet, dass** das teleskopierbare Doppelrohr ein in das Sattelrohr (7, 42) einschiebbares Rohr (19) und ein in letzteres einschiebbares Teleskoprohr (17), an dem der Sattel (16) befestigt ist, aufweist.

14. Fahrrad nach einem der Ansprüche 1 bis 13, **dadurch gekennzeichnet, dass** die Gelenke (3,5,9,11) in den Rahmenrohren (2,4,6; 8,10,12) als bei gestreckten Rohren spielfreie Lager ausgebildet sind.

15. Fahrrad nach Anspruch 14, **dadurch gekennzeichnet, dass** die Gelenke (3, 5, 9, 11) zwei gleichachsig nebeneinander angeordneten Hülsen (30,31), an welchen Teile der Rahmenrohre (2, 4, 6; 8, 10, 12) befestigt sind, aufweist, dass in einer der Hülsen (30, 31) ein Rohr (33) mit Außengewinde mit Überstand festgelegt ist, dass das Rohr (33) in ein in der anderen Hülse (30) auslaufendes Gewinde eingeschraubt ist, und dass bei gestreckten Teilen des Rahmenrohres (2, 4, 6; 8, 10, 12) das Rohr (33) am Ende des Gewindes in der anderen Hülse (30) aufläuft.

16. Fahrrad nach Anspruch 15, **dadurch gekennzeichnet, dass** das mit Außengewinde versehene Rohr (33) in der einen Hülse (31) durch eine Gegenschraube in Form eines mit Außengewinde versehenen Ringes (32) festgelegt ist.

17. Fahrrad nach einem der Ansprüche 1 bis 16, **dadurch gekennzeichnet, dass** der Schwenkpunkt (41) des das Hinterrad tragenden Rahmenteils (44, 46) im Bereich des unteren Endes des Sattelrohres (42) angeordnet ist und dass die Pleuelstange (43) am unteren der beiden Rahmenrohre angelenkt ist.

18. Fahrrad nach einem der Ansprüche 1 bis 17, **dadurch gekennzeichnet, dass** die Hinterradstreben (46) durch Gelenke (47) knickbar ausgebildet sind, und dass die Hinterradstreben im Bereich ihrer Gelenke (47) mit einem langenveränderlichen Verbindungsglied (48) mit dem oberen Ende des Sattelrohres (42) gekuppelt sind.

19. Fahrrad nach Anspruch 18, **dadurch gekennzeichnet, dass** das längenveränderliche Verbindungsglied (48) als Feder oder Gasdruckfeder ausgebildet ist und dass eine lösbare Rastverbindung (50) zwischen dem oberen Ende des Sattelrohres (42) und dem das Hinterrad tragenden Teil (44,46) des Rahmens vorgesehen ist.

20. Fahrrad nach Anspruch 18 oder 19, **dadurch gekennzeichnet, dass** die Hinterradstreben (46) im Bereich ihrer Gelenke (47) gegenüber den Kettenstreben (21) abgestützt und mit diesen verbunden sind.

## Claims

1. A bicycle with a frame, in which are fitted a rear wheel and a front wheel which can be steered by a fork (14), wherein an upper frame tube and a lower frame tube are arranged between the head tube (1) receiving the fork (14) and a seat tube (7), each consisting of three tubes (2, 4, 6; 8, 10, 12) which are connected together by two joints (3, 5; 9, 11) in each case, wherein the part (21, 23, 24, 25) of the frame carrying the rear wheel can pivot about an axis parallel to the pivotal axes of the joints (3, 5; 9, 11) in the frame tubes (2, 4, 6; 8, 10, 12), **characterized in that** the part (21, 23, 24, 25) carrying the rear wheel is supported on the seat tube (7, 42) in position of use, **in that** sprung detent means (28, 50) are provided in order to fix the part (21, 23, 24, 25) carrying the rear wheel on the one hand in the position of use and on the other hand in the position shortened by folding in the part (21, 23, 24, 25) of the frame carrying the rear wheel, **in that** the pivotable part (21, 23, 24, 25) of the frame carrying the rear wheel is coupled through at least one connecting rod (27) to a joint (3, 5; 9, 11) in the front region of the frame, and **in that** the connecting rod (27) is connected to a part of the chain stays (21, 25; 44) projecting beyond the joint (9,41) of the part (21, 23, 24) of the frame carrying the rear wheel.

2. A bicycle according to claim 1, **characterized in that** the axis about which the part (21, 23, 24, 25) of the frame carrying the rear wheel can pivot is identical with the axis of a joint (3, 5; 9, 11) in the frame tubes (2, 4, 6; 8, 10, 12).

3. A bicycle according to claim 2, **characterized in that** the part (21, 23, 24, 25) of the frame carrying the rear wheel can pivot about the axis of the joint (9) which is disposed adjacent the seat tube (7) in the lower frame tube (8, 10, 12).

4. A bicycle according to any of claims 1 to 3, **characterized in that** the part (21, 23, 24, 25) of the frame carrying the rear wheel is of substantially triangular form.

5. A bicycle according to any of claims 1 to 4, **characterized in that** the pedal crank tube [= bottom bracket] (22) is provided in the pivotable part (21, 23, 24, 25) of the frame carrying the rear wheel.

6. A bicycle according to any of claims 1 to 5, **characterized in that** the part (21, 23, 24, 25) of the frame carrying the rear wheel consists of two chain stays (21) running symmetrically to the longitudinal central plane of the bicycle, two swinging stays (25) and two rear wheel stays (24) and of a stay (23) which is substantially parallel to the seat tube (7) in the position of use and which is arranged between the pedal crank tube (22) and the plate (23') connecting together the rear wheel stays (24).

7. A bicycle according to claim 1, **characterized in that** the detent means comprise a pivoted lever (28, 50).

8. A bicycle according to claim 7, **characterized in that** two detent recesses are provided in the pivoted lever (28), in which a plate (26) fixed at the upper end of the stays (23) engages.

9. A bicycle according to any of claims 1 to 8, **characterized in that** the pivoted lever (28, 50) is mounted on the upper end of the seat tube (7, 42).

10. A bicycle according to any of claims 1 to 9, **characterized in that** a spring is provided between the seat tube (7, 42) and the lever (28, 50), biasing this up into its detent position.

11. A bicycle according to any of claims 1 to 10, **characterized in that** the connecting rod (27) is coupled to the joint (3) of the upper frame tube (2, 4, 6) which is adjacent the head tube (1).

12. A bicycle according to any of claims 1 to 11, **characterized in that** the seat support (16, 17) is in the form of a telescopic double tube.

13. A bicycle according to claim 12, **characterized in that** the telescopic double tube comprises a tube (19) which can be inserted in the seat tube (7, 42) and a telescopic tube (17) which can be inserted in the former and on which the saddle (16) is fixed.

14. A bicycle according to any of claims 1 to 13, **characterized in that** the joints (3, 5, 9, 11) in the frame tubes (2, 4, 6; 8, 10, 12) are in the form of bearings free from play with the tubes extended.

15. A bicycle according to claim 14, **characterized in that** the joints (3, 5, 9, 11) comprise two coaxially adjacent sleeves (30, 31) on which parts of the frame tubes (2, 4, 6; 8, 10, 12) are fixed, **in that** a tube (33) with an external thread is fixed with projecting length in one of the sleeves (30, 31), **in that** the tube is screwed into a thread running opening out of the other sleeve (30), and **in that** the tube (33) stops at the end of the thread in the other sleeve (30).

16. A bicycle according to claim 15, **characterized in that** the tube (33) provided with an external thread is fixed in the one sleeve (31) by a lock screw in the form of a ring (32) provided with an external thread.

17. A bicycle according to any of claims 1 to 16, **characterized in that** the centre of gravity (41) of the frame part (44, 45) carrying the rear wheel is disposed in the region of the lower end of the seat tube (42) and **in that** the connecting rod (43) is articulated on the lower of the two frame tubes.

18. A bicycle according to any of claims 1 to 17, **characterized in that** the rear wheel stays (46) are made capable of buckling by joints (47) and **in that** the rear wheel stays are coupled in the region of their joints (47) by a connecting member (48) of variable length to the upper end of the seat tube (42).

19. A bicycle according to claim 18, **characterized in that** the connecting member (48) of variable length is in the form of a spring or a gas spring and **in that** a releasable detent connection (50) is provided between the upper end of the seat tube (42) and the part (44, 46) of the frame carrying the rear wheel.

20. A bicycle according to claim 18 or 19, **characterized in that** the rear wheel stays (46) are supported relative to and are connected to the chain stays (21) in the region of their joints (47).

## Revendications

1. Vélo avec un cadre dans lequel sont montées une roue arrière et une roue avant dirigeable par l'intermédiaire d'une fourche (14), un tube de cadre supérieur et un tube de cadre inférieur étant placés entre le tube inférieur (1) recevant la fourche (14) et un tube de selle (7) et étant constitués chacun de trois tubes (2, 4, 6 ; 8, 10, 12) qui sont assemblés à chaque fois par l'intermédiaire de deux articulations (3, 5 ; 9, 11) et la partie (21, 23, 24, 25) de cadre, portant la roue arrière, pouvant pivoter autour d'un axe parallèle aux axes de pivotement des articulations (3, 5 ; 9, 11) dans les tubes de cadre (2, 4, 6 ; 8, 10, 12), **caractérisé en ce que** la partie (21, 23, 24, 25) portant la roue arrière est appuyée en position d'utilisation au tube de selle (7, 42), **en ce que** des moyens de verrouillage (28, 50) élastiques sont prévus pour fixer la partie de cadre (21, 23, 24, 25) portant la roue arrière d'une part en position d'utilisation et d'autre part en position réduite par le pliage de la partie de cadre (21, 23, 24, 25) portant la roue arrière, **en ce que** la partie de cadre (21, 23, 24, 25) pivotante et portant la roue arrière est couplée par l'intermédiaire d'au moins une bielle (27) à une articulation (3, 5 ; 9, 11) dans la zone avant du cadre et **en ce que** la bielle (27) est assemblée à une partie, dépassant de l'articulation (9, 41) de la partie de cadre (21, 23, 24, 25) portant la roue arrière, des barres de chaîne (21, 25 ; 44).

2. Vélo selon la revendication 1, **caractérisé en ce que** l'axe autour duquel la partie de cadre (21, 23, 24, 25) portant la roue arrière est pivotante est identique à l'axe d'une articulation (3, 5 ; 9, 11) dans les tubes de cadre (2, 4, 6 ; 8, 10, 12).

3. Vélo selon la revendication 2, **caractérisé en ce que** la partie de cadre (21, 23, 24, 25) portant la roue arrière est pivotante autour de l'axe de l'articulation (9) qui est placée dans le tube de cadre inférieur (8, 10, 12) au voisinage du tube de selle (7).

4. Vélo selon l'une des revendications 1 à 3, **caractérisé en ce que** la partie de cadre (21, 23, 24, 25) portant la roue arrière est conçue essentiellement triangulaire.

5. Vélo selon l'une des revendications 1 à 4, **caractérisé en ce que** le tube de manivelle de pédalier (22) est prévu dans la partie de cadre (21, 23, 24, 25) pivotante et portant la roue arrière.

6. Vélo selon l'une des revendications 1 à 5, **caractérisé en ce que** la partie de cadre (21, 23, 24, 25) portant la roue arrière est constituée de deux barres de chaîne (21) s'étendant symétriquement par rapport au plan médian longitudinal du vélo, de deux barres de coulisse (25) et de deux barres de roue arrière (24) ainsi que d'une barre (23) qui est en position d'utilisation essentiellement parallèle au tube de selle (7) et qui est placée entre le tube de manivelle de pédalier (22) et la plaque (23') reliant entre elles les barres de roue arrière (24).

7. Vélo selon la revendication 1, **caractérisé en ce que** le moyen de verrouillage comporte un levier pivotant (28, 50).

8. Vélo selon la revendication 7, **caractérisé en ce qu'**il est prévu dans le levier pivotant (28) deux évidements de verrouillage dans lesquels s'enclenche une plaque (26) fixée à l'extrémité supérieure de la barre (23).

9. Vélo selon l'une des revendications 1 à 8, **caractérisé en ce que** le levier pivotant (28, 50) est monté sur l'extrémité supérieure du tube de selle (7, 42).

10. Vélo selon l'une des revendications 1 à 9, **caractérisé en ce qu'**il est prévu entre le tube de selle (7, 42) et le levier (28, 50) un ressort poussant ce dernier vers le haut dans sa position de verrouillage.

11. Vélo selon l'une des revendications 1 à 10, **caractérisé en ce que** la bielle (27) est couplée à l'articulation (3) du tube de cadre supérieur (2, 4, 6) qui est voisin du tube de guidon (1).

12. Vélo selon l'une des revendications 1 à 11, **caractérisé en ce que** le porte-selle (16, 17) est conçu comme un double tube télescopique.

13. Vélo selon la revendication 12, **caractérisé en ce que** le double tube télescopique comporte un premier tube (19) pouvant être enfoncé dans le tube de selle (7, 42) et un tube télescopique (17) pouvant être enfoncé dans ce premier tube et auquel la selle (16) est fixée.

14. Vélo selon l'une des revendications 1 à 13, **caractérisé en ce que** les articulations (3, 5, 9, 11) dans les tubes de cadre (2, 4, 6 ; 8, 10, 12) sont conçues comme des paliers sans jeu lorsque les tubes sont déployés.

15. Vélo selon la revendication 14, **caractérisé en ce que** les articulations (3, 5, 9, 11) présentent deux manchons (30, 31) qui sont disposés l'un à côté de l'autre sur un même axe et auxquels des parties des tubes de cadre (2, 4, 6 ; 8, 10, 12) sont fixées, **en ce qu'**un tube (33) avec filetage extérieur avec saillie est fixé dans l'un des manchons (30, 31 ), **en ce que** le tube (33) est vissé dans un filetage se terminant dans l'autre manchon (30) et **en ce que**, lorsque les parties des tubes de cadre (2, 4, 6 ; 8, 10, 12) sont déployées, le tube (33) arrive à l'extrémité du filetage dans l'autre manchon (30).

16. Vélo selon la revendication 15, **caractérisé en ce que** le tube (33) avec filetage extérieur est fixé dans le manchon (31) par une vis complémentaire sous la forme d'un anneau (32) muni d'un filetage extérieur.

17. Vélo selon l'une des revendications 1 à 16, **caractérisé en ce que** le centre de gravité (41) de la partie de cadre (44, 46) portant la roue arrière est placé dans la zone de l'extrémité inférieure du tube de selle (42) et **en ce que** la bielle (43) est articulée sur celui des deux tubes de cadre qui est le tube inférieur.

18. Vélo selon rune des revendications 1 à 17, **caractérisé en ce que** les barres de roue arrière (46) sont conçues pliables par des articulations (47) et **en ce que** les barres de roue arrière sont couplées dans la zone de leurs articulations (47), par un élément d'assemblage (48) de longueur variable, à l'extrémité supérieure du tube de selle (42) .

19. Vélo selon la revendication 18, **caractérisé en ce que** l'élément d'assemblage (48) de longueur variable est conçu comme un ressort ou comme un ressort à pression gazeuse et **en ce qu'**un assemblage à crans pouvant être défait (50) est prévu entre l'extrémité supérieure du tube de selle (42) et la partie de cadre (44, 46) portant la roue arrière.

20. Vélo selon la revendication 18 ou 19, **caractérisé en ce que** les barres de roue arrière (46) sont soutenues dans la zone de leurs articulations (47) par rapport aux barres de chaîne (21) et sont assemblées à celles-ci.
